# EUROPEAN PATENT SPECIFICATION

(11) **EP 3 427 222 B1**
(45) Date of publication and mention of the grant of the patent: **07.08.2024**
(21) Application number: 17713812.0
(22) Date of filing: 07.03.2017
(51) Int. Cl.: G06Q 10/0832, G06Q 10/08

(54) **COLD CHAIN DATA TRANSFER AT HANDOFF**
KÜHLKETTENDATENÜBERTRAGUNG BEI DER ÜBERGABE
ÉCHANGE DE DONNÉES DE CHAÎNE DU FROID AU MOMENT DU TRANSFERT

(30) Priority: 10.03.2016 US 201662306414 P
(43) Date of publication of application: 16.01.2019
(73) Proprietor: Carrier Corporation, Farmington, Connecticut 06032 (US)
(72) Inventor: CRONIN, John, Williston, Vermont 05495 (US); GOGUEN, Jonathan T., Williston, Vermont 05495 (US); HUFFINES, Christopher Michael, Williston, Vermont 05495 (US)
(74) Representative: Dehns
(86) International application number: PCT/US2017/021059
(87) International publication number: WO 2017/155925

(56) References cited:
- WO-A2-2008/030575
- US-A1- 2007 058 804
- US-A1- 2008 294 488
- US-A1- 2014 180 953
- US-A1- 2015 046 361
- US-A1- 2015 046 364

## Description

### BACKGROUND

The present disclosure relates to a cold chain system and more specifically, to methods, systems, and computer program products for processing data from the cold chain system.

A cold chain is a temperature-controlled supply chain. Particularly, a cold chain is an unbroken and uninterrupted series of storage and distribution activities which maintain a given temperature range for product being moved along the chain. For example, a cold chain is used to help extend and ensure the shelf life of products such as fresh agricultural produce, seafood, frozen food, film, fluids, chemicals, pharmaceutical drugs, and other temperature sensitive items.

A current issue with cold chain implementations is that sensor data is collected and analyzed to create recommendations on routes and other travel elements at a signal point. For example, making recommendations can be done at a signal local point. Further, in addition to only being a single processing point, the local point could only take into account local conditions. Further, even if information from other parts can be transmitted to a current location, as the product moves that information needs to be moved as well and duplicative processing elements would be included along the way. Further, there are no alternative suggestions provided to those calculated locally, or otherwise, from a signal point.

Accordingly, there is desire for a system and method with more robust data processing for data from a cold chain system.

### BRIEF DESCRIPTION

A method of processing data of a cold chain system according to claim 1 is provided.

A cold chain data processing system for processing data from a cold chain system according to claim 9 is provided.

Preferred embodiments are specified in the dependent claims.

### BRIEF DESCRIPTION OF THE DRAWINGS

The foregoing and other features, and advantages of the present disclosure are apparent from the following detailed description taken in conjunction with the accompanying drawings in which:
FIG. 1 depicts a cloud computing environment according to an embodiment of the present disclosure;
FIG. 2 depicts abstraction model layers according to an embodiment of the present disclosure;
FIG. 3 is a block diagram illustrating one example of a processing system for practice of the teachings herein;
FIG. 4 depicts a block diagram illustrating an overall system in accordance with an embodiment of the present disclosure;
FIG. 5 depicts a flow diagram of a cloud SaaS software in accordance with an embodiment of the present disclosure;
FIG. 6 depicts table showing examples of risk values in accordance with an embodiment of the present disclosure;
FIG. 7 depicts a flow diagram of a local SaaS software in accordance with an embodiment of the present disclosure;
FIG. 8 depicts a graphical user interface (GUI) in accordance with an embodiment of the present disclosure; and
FIG. 9 depicts a flow chart of a method of processing data from a cold chain system in accordance with an embodiment of the present disclosure.

### DETAILED DESCRIPTION

It is understood in advance that although this disclosure includes a detailed description on cloud computing, implementation of the teachings recited herein are not limited to a cloud computing environment. Rather, embodiments of the present disclosure are capable of being implemented in conjunction with any other type of computing environment now known or later developed.

Cloud computing is a model of service delivery for enabling convenient, on-demand network access to a shared pool of configurable computing resources (e.g. networks, network bandwidth, servers, processing, memory, storage, applications, virtual machines, and services) that can be rapidly provisioned and released with minimal management effort or interaction with a provider of the service. This cloud model may include at least five characteristics, at least three service models, and at least four deployment models.

Characteristics are as follows:
On-demand self-service: a cloud consumer can unilaterally provision computing capabilities, such as server time and network storage, as needed automatically without requiring human interaction with the service's provider.

Broad network access: capabilities are available over a network and accessed through standard mechanisms that promote use by heterogeneous thin or thick client platforms (e.g., mobile phones, laptops, and PDAs).

Resource pooling: the provider's computing resources are pooled to serve multiple consumers using a multi-tenant model, with different physical and virtual resources dynamically assigned and reassigned according to demand. There is a sense of location independence in that the consumer generally has no control or knowledge over the exact location of the provided resources but may be able to specify location at a higher level of abstraction (e.g., country, state, or datacenter).

Rapid elasticity: capabilities can be rapidly and elastically provisioned, in some cases automatically, to quickly scale out and rapidly released to quickly scale in. To the consumer, the capabilities available for provisioning often appear to be unlimited and can be purchased in any quantity at any time.

Measured service: cloud systems automatically control and optimize resource use by leveraging a metering capability at some level of abstraction appropriate to the type of service (e.g., storage, processing, bandwidth, and active user accounts). Resource usage can be monitored, controlled, and reported providing transparency for both the provider and consumer of the utilized service.

Service Models are as follows:
Software as a Service (SaaS): the capability provided to the consumer is to use the provider's applications running on a cloud infrastructure. The applications are accessible from various client devices through a thin client interface such as a web browser (e.g., web-based e-mail). The consumer does not manage or control the underlying cloud infrastructure including network, servers, operating systems, storage, or even individual application capabilities, with the possible exception of limited user-specific application configuration settings.

Platform as a Service (PaaS): the capability provided to the consumer is to deploy onto the cloud infrastructure consumer-created or acquired applications created using programming languages and tools supported by the provider. The consumer does not manage or control the underlying cloud infrastructure including networks, servers, operating systems, or storage, but has control over the deployed applications and possibly application hosting environment configurations.

Infrastructure as a Service (IaaS): the capability provided to the consumer is to provision processing, storage, networks, and other fundamental computing resources where the consumer is able to deploy and run arbitrary software, which can include operating systems and applications. The consumer does not manage or control the underlying cloud infrastructure but has control over operating systems, storage, deployed applications, and possibly limited control of select networking components (e.g., host firewalls).

Deployment Models are as follows:
Private cloud: the cloud infrastructure is operated solely for an organization. It may be managed by the organization or a third party and may exist on-premises or offpremises.

Community cloud: the cloud infrastructure is shared by several organizations and supports a specific community that has shared concerns (e.g., mission, security requirements, policy, and compliance considerations). It may be managed by the organizations or a third party and may exist on-premises or off-premises.

Public cloud: the cloud infrastructure is made available to the general public or a large industry group and is owned by an organization selling cloud services.

Hybrid cloud: the cloud infrastructure is a composition of two or more clouds (private, community, or public) that remain unique entities but are bound together by standardized or proprietary technology that enables data and application portability (e.g., cloud bursting for load-balancing between clouds).

A cloud computing environment is service oriented with a focus on statelessness, low coupling, modularity, and semantic interoperability. At the heart of cloud computing is an infrastructure comprising a network of interconnected nodes.

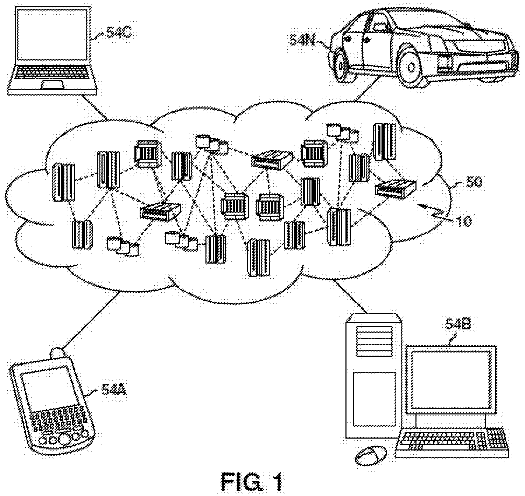

Referring now to Fig. 1, illustrative cloud computing environment 50 is depicted. As shown, cloud computing environment 50 comprises one or more cloud computing nodes 10 with which local computing devices used by cloud consumers, such as, for example, personal digital assistant (PDA) or cellular telephone 54A, desktop computer 54B, laptop computer 54C, and/or automobile computer system 54N may communicate. Nodes 10 may communicate with one another. They may be grouped (not shown) physically or virtually, in one or more networks, such as Private, Community, Public, or Hybrid clouds as described hereinabove, or a combination thereof. This allows cloud computing environment 50 to offer infrastructure, platforms and/or software as services for which a cloud consumer does not need to maintain resources on a local computing device. It is understood that the types of computing devices 54A-N shown in Fig. 1 are intended to be illustrative only and that computing nodes 10 and cloud computing environment 50 can communicate with any type of computerized device over any type of network and/or network addressable connection (e.g., using a web browser).

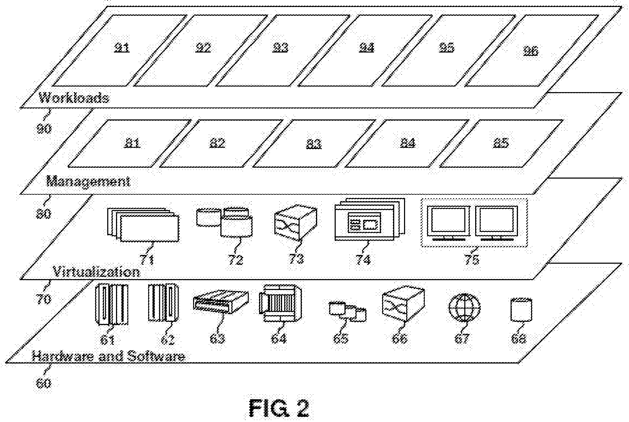

Referring now to Fig. 2, a set of functional abstraction layers provided by cloud computing environment 50 (Fig. 1) is shown. It should be understood in advance that the components, layers, and functions shown in Fig. 2 are intended to be illustrative only and embodiments of the disclosure are not limited thereto. As depicted, the following layers and corresponding functions are provided:
Hardware and software layer 60 includes hardware and software components. Examples of hardware components include: mainframes 61; RISC (Reduced Instruction Set Computer) architecture-based servers 62; servers 63; blade servers 64; storage devices 65; and networks and networking components 66. In some embodiments, software components include network application server software 67 and database software 68.

Virtualization layer 70 provides an abstraction layer from which the following examples of virtual entities may be provided: virtual servers 71; virtual storage 72; virtual networks 73, including virtual private networks; virtual applications and operating systems 74; and virtual clients 75.

In one example, management layer 80 may provide the functions described below. Resource provisioning 81 provides dynamic procurement of computing resources and other resources that are utilized to perform tasks within the cloud computing environment. Metering and Pricing 82 provide cost tracking as resources are utilized within the cloud computing environment, and billing or invoicing for consumption of these resources. In one example, these resources may comprise application software licenses. Security provides identity verification for cloud consumers and tasks, as well as protection for data and other resources. User portal 83 provides access to the cloud computing environment for consumers and system administrators. Service level management 84 provides cloud computing resource allocation and management such that required service levels are met. Service Level Agreement (SLA) planning and fulfillment 85 provides pre-arrangement for, and procurement of, cloud computing resources for which a future requirement is anticipated in accordance with an SLA.

Workloads layer 90 provides examples of functionality for which the cloud computing environment may be utilized. Examples of workloads and functions which may be provided from this layer include: mapping and navigation 91; software development and lifecycle management 92; virtual classroom education delivery 93; data analytics processing 94; transaction processing 95; and processing of messages across multiple communication systems 96.

In accordance with exemplary embodiments of the disclosure, methods, systems and computer program products for prioritizing delivery of messages across multiple communication systems are provided. In exemplary embodiments, a messaging system is configured to receive messages for an individual across multiple communication systems utilized by the individual. The messaging system is also configured to determine a priority level associated with each of the messages based on an analysis of the messages and a user profile of the individual. Based on the determined priority level and the user profile, the messaging system delivers the messages to a desired communication device via a desired messaging system. In exemplary embodiments, the user profile is updated by the messaging system upon receiving feedback from the individual, wherein the feedback includes message delivery preferences and message priority preferences of the individual.

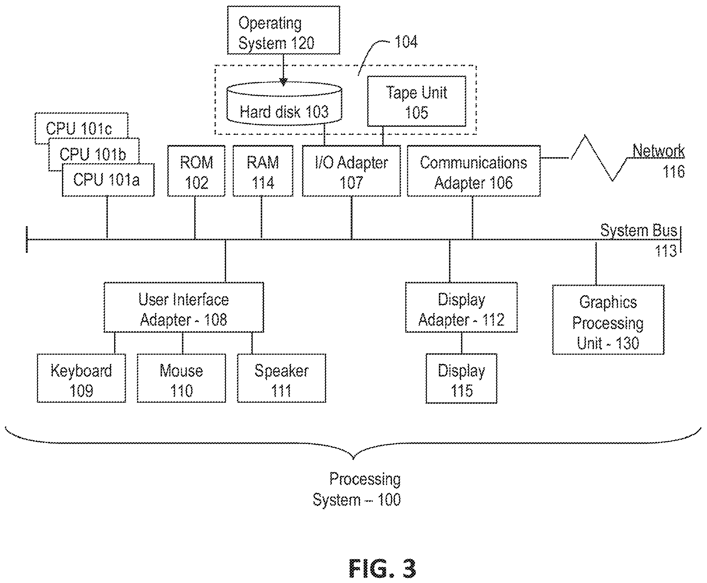

Referring to FIG. 3, there is shown an embodiment of a processing system 100 for implementing the teachings herein. In this embodiment, the system 100 has one or more central processing units (processors) 101a, 101b, 101c, etc. (collectively or generically referred to as processor(s) 101). In one embodiment, each processor 101 may include a reduced instruction set computer (RISC) microprocessor. Processors 101 are coupled to system memory 114 and various other components via a system bus 113. Read only memory (ROM) 102 is coupled to the system bus 113 and may include a basic input/output system (BIOS), which controls certain basic functions of system 100.

FIG. 3 further depicts an input/output (I/O) adapter 107 and a network adapter 106 coupled to the system bus 113. I/O adapter 107 may be a small computer system interface (SCSI) adapter that communicates with a hard disk 103 and/or tape storage drive 105 or any other similar component. I/O adapter 107, hard disk 103, and tape storage device 105 are collectively referred to herein as mass storage 104. Operating system 120 for execution on the processing system 100 may be stored in mass storage 104. A network adapter 106 interconnects bus 113 with an outside network 116 enabling data processing system 100 to communicate with other such systems. A screen (e.g., a display monitor) 115 is connected to system bus 113 by display adaptor 112, which may include a graphics adapter to improve the performance of graphics intensive applications and a video controller. In one embodiment, adapters 107, 106, and 112 may be connected to one or more I/O busses that are connected to system bus 113 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 113 via user interface adapter 108 and display adapter 112. A keyboard 109, mouse 110, and speaker 111 all interconnected to bus 113 via user interface adapter 108, which may include, for example, a Super I/O chip integrating multiple device adapters into a single integrated circuit.

In exemplary embodiments, the processing system 100 includes a graphics processing unit 130. Graphics processing unit 130 is a specialized electronic circuit designed to manipulate and alter memory to accelerate the creation of images in a frame buffer intended for output to a display. In general, graphics processing unit 130 is very efficient at manipulating computer graphics and image processing, and has a highly parallel structure that makes it more effective than general-purpose CPUs for algorithms where processing of large blocks of data is done in parallel.

Thus, as configured in FIG. 3, the system 100 includes processing capability in the form of processors 101, storage capability including system memory 114 and mass storage 104, input means such as keyboard 109 and mouse 110, and output capability including speaker 111 and display 115. In one embodiment, a portion of system memory 114 and mass storage 104 collectively store an operating system to coordinate the functions of the various components shown in FIG. 3.

According to one or more embodiments, dual paths of data for dual parallel data processing are provided where value is produced at local levels of hand offs unknown by the cold chain. This redundant data channel can provide quality results by allowing each channel to serve as data check as well as a backup for the other channel.

According to one or more embodiments, parallel data processing is provided that has touchpoints with a container sensor system and performs the parallel processing at each touchpoint (e.g. a trans-shipment point). At each touchpoint, container sensors and foodstuff sensors establish the condition of the food and the vehicle, and the local SaaS Software feeds travel data and options to the shipping container GUI. The Transport Network also feeds travel data and options to the GUI. The shipper may then make changes based on the local processer results or the cloud processor results.

According to one or more embodiments, data collected at one point is allowed to be transferred at handoff points, for instance data from a package is handed off to a shipping truck or from shipping truck to a warehouse. This data can be used at each handoff for local analysis. A SaaS cloud service can access and store all the data when it is generated, but decisions and analysis can be made at the specific handoff that might not be made at the Cloud SaaS, for instance, a particular truck has unknown maintenance scheduled by the Cloud, but the produce data handed off provides a worst-case time of transit, the trucker can determine not to accept the load. In this way Handoffs of data and local analysis are used in benefit with the Cloud SaaS.

According to one or more embodiments, parallel data processing includes the use of touchpoints with the container sensor system and performs the parallel processing at each touchpoint. At each touchpoint, the shipper may make changes based on the local processer results or the cloud processor results. For example, according to an embodiment, cold chain produce shippers can use this process to accurately make changes based on decisions at specific stopping points during shipping.

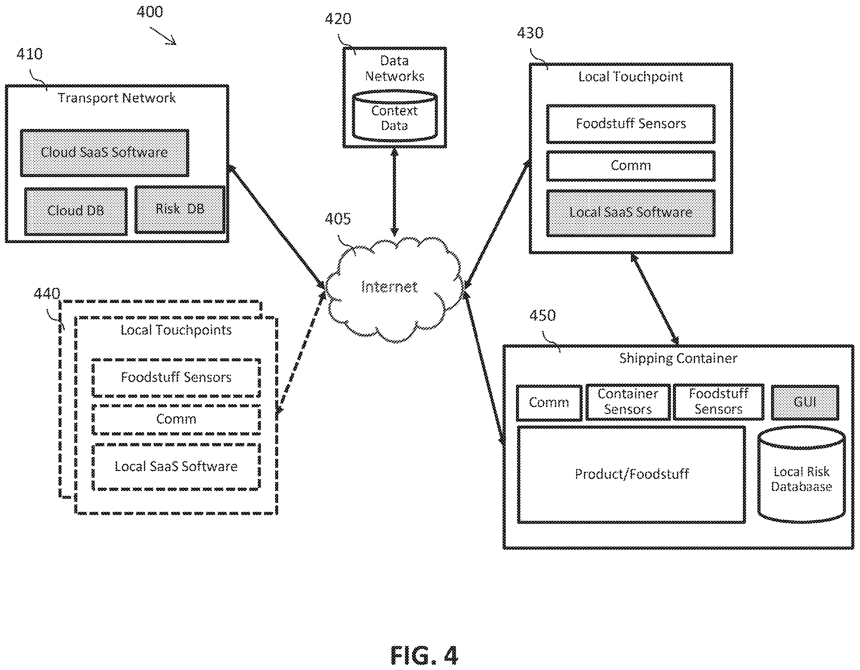

Referring now to FIG. 4, FIG. 4 depicts a block diagram illustrating an overall cold chain system 400 in accordance with an exemplary embodiment. The system 400 includes a cloud-based processing system 410, which can also be called a transport network 410 as shown. The system 400 also includes data networks 420, a local touchpoint 430, and a shipping container 450 which are communicatively connected to each other through the internet 405, or can be connected either directly or through another network type. Further, the system 400 may include a plurality of local touchpoints 440 along the cold chain. The plurality of local touchpoints 440 are substantially similar to the local touchpoint 430 in what they include and how they receive, process, and output data, and differ primarily in location along the cold chain.

Looking more closely, according to one or more embodiments, the transport network 410 includes cloud SaaS software that includes operations that generate cloud processor results. The transport network 410 also includes a cloud database (DB) and a risk DB which is used to store received sensor data and other stored data as well as storing generated cloud processor results that include travel data and options. The data networks 420 include context data that is received over time, stored, and transmitted to processing elements when requested by an operation.

According to one or more embodiments, the local touchpoint 430 includes foodstuff sensors, communication devices, and local SaaS software. The local touchpoint collected sensor data from the local foodstuff sensors and also can receive sensor data from sensors in a shipping container 450 using the communication devise in the local touchpoint. The local touchpoint 430 processes the received sensor data and generates local processor results using the local SaaS software.

According to one or more embodiments, the shipping container 450 includes a communication device, container sensors, foodstuff sensors, a GUI, a local risk database, and the product and/or foodstuff being transported and monitored as it is transported along the cold chain. The shipping container 450 collected sensor data using the container sensors and foodstuff sensors transmits that sensor data using the communication device directly to the local touchpoint 430 for risk processing. The shipping container 450 will also transmit the sensor data using the communication device out over the internet to one or more of the data networks 420 to be stored in with the context data or to the transport network 410 for parallel data processing.

Further, according to one or more embodiments, the system 400 may include the plurality of touchpoints 440 which are located along the cold chain route that the shipping container travels along. Each of the plurality of touchpoints 440 will be triggered when the shipping container arrives at that point of the route. At that point, each of the touchpoints 440 will collected sensor data, process that data, and provide recommendation and risk analysis in addition to that which the cloud-based processing system (transport network 41) processes and provides.

For example, one or more embodiments of the disclosure creates a parallel processing system that has touchpoints with the container sensor system and performs the parallel processing at each touchpoint (e.g. a trans-shipment point). At each touchpoint, container sensors and foodstuff sensors establish the condition of the food and the vehicle, and the local SaaS Software feeds travel data and options to the shipping container GUI. The Transport Network also feeds travel data and options to the GUI. The shipper may make changes based on the local processer results or the cloud processor results. The context Data is added to the data streams (such as weather, etc.) for further analysis.

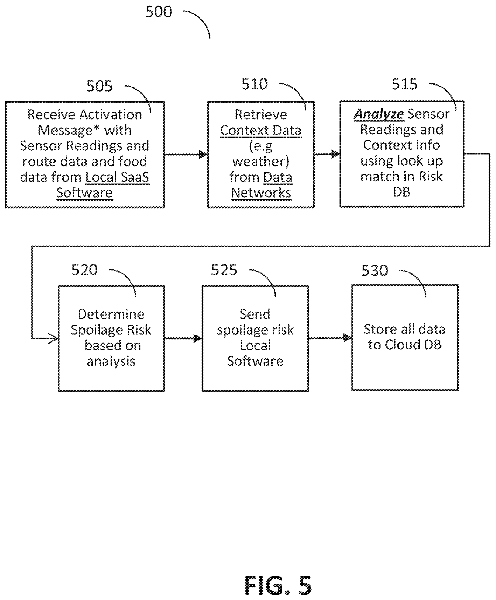

FIG. 5 depicts a flow diagram of a cloud SaaS software 500 in accordance with an exemplary embodiment. As shown, cloud SaaS Software governs the receipt of sensor information, analysis, and providing spoilage risks to the user. The first operation is the receipt of the activation message with sensor readings from the local SaaS software (operation 505), which sent it upon receiving data from the shipping container. An activation message means a shipping container has interacted with a local touchpoint. After that, context data is retrieved from one or more data networks (operation 510), to provide context data (e.g. traffic, weather) that may affect the analysis. The sensor reading and context information are analyzed using look up match in the risk DB (operation 515). Next the spoilage risk is run by matching data to the risk database in the cloud (operation 520). The spoilage risk is then sent to the Local Software (operation 525) and then all the data is stored in the Cloud DB (operation 530).

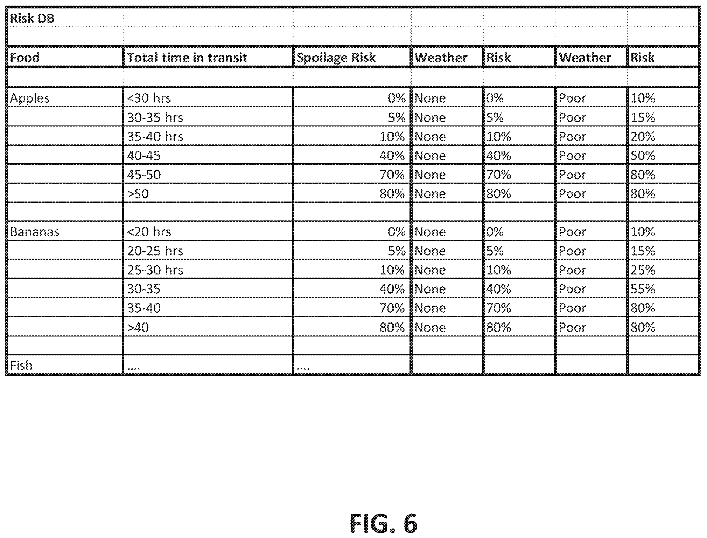

FIG. 6 depicts a table showing examples of risk values in accordance with one or more embodiments that are stored in a risk database. As shown, this table shows the data stored in the risk Database for various foods, various transit times, various risk (with and without weather). This database can be expanded for any other context data, for instance container sensors. Specifically, the table shows different scenarios for Apples, Bananas, and can go on listing other products such as Fish with similar information. For example, looking at Apples the table shows that as a total time in transit increases so does the spoilage risk. Further, the table shows weather predictions and how the risk percentage is affected due to the different weather conditions. For example, when there is no weather condition present the risk remains the same as the spoilage risk, but when the weather condition is poor the risk increase. Similar information is shown for Bananas. Further, according to another embodiment, this table showing information from a database can be replicated to create a table that is similar for the "Local Risk Database" but it may contain more limited risk analysis, i.e. it may not be able to analyze current sensor data.

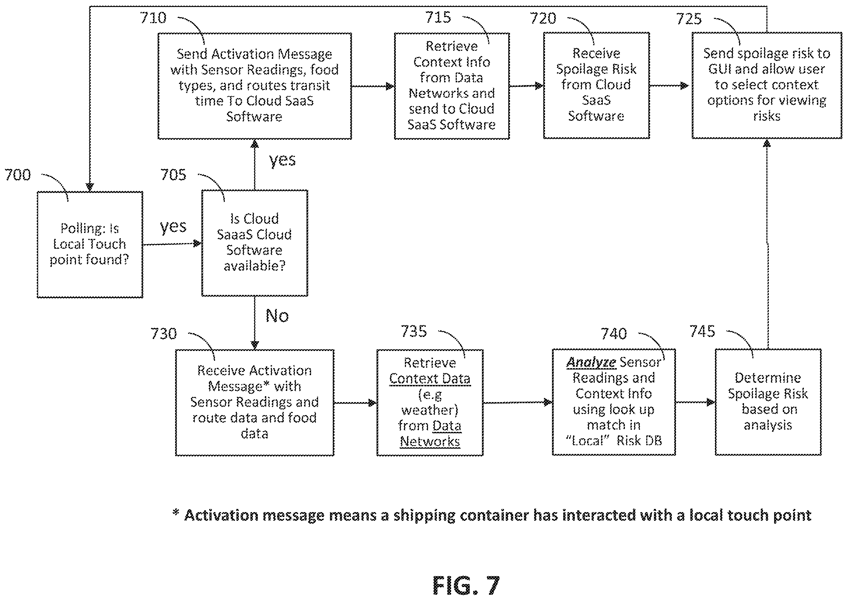

FIG. 7 depicts a flow diagram of local SaaS software in accordance with an exemplary embodiment. Initially, the local SaaS software includes an operation that polls the system to see if a local touchpoint is found (operation 700). When one is found the method implemented by the software operations goes on depending on cloud and local resource availability (operation 705).

Specifically, if cloud SaaS Software is available the local SaaS Software governs the receipt of sensor information, analysis, and providing spoilage risks to the user. The first operation is the receipt of a local touchpoint found and then sending an activation message with sensor readings, food types, and routes transit time to cloud SaaS Software (operation 710). Next retrieval of context info from data networks is provided as well as sending that context info to the cloud SaaS software (operation 715). The spoilage risk is then received from the cloud SaaS software (operation 720) and then it is sent to a GUI configured to allow a user to select context options for viewing risks (operation 725).

Alternatively, if cloud SaaS software is not available, the first step is the receipt of the activation message with sensor readings received from the shipping container (operation 730). After that, context data is retrieved from one or more data networks, to provide context data (e.g. traffic, weather) that may affect the analysis (operation 735). Next the spoilage risk is run by matching data to the local risk database (operation 740). The spoilage risk is then determined based on the analysis (operation 745) and then the spoilage risk is then sent to the GUI (operation 725).

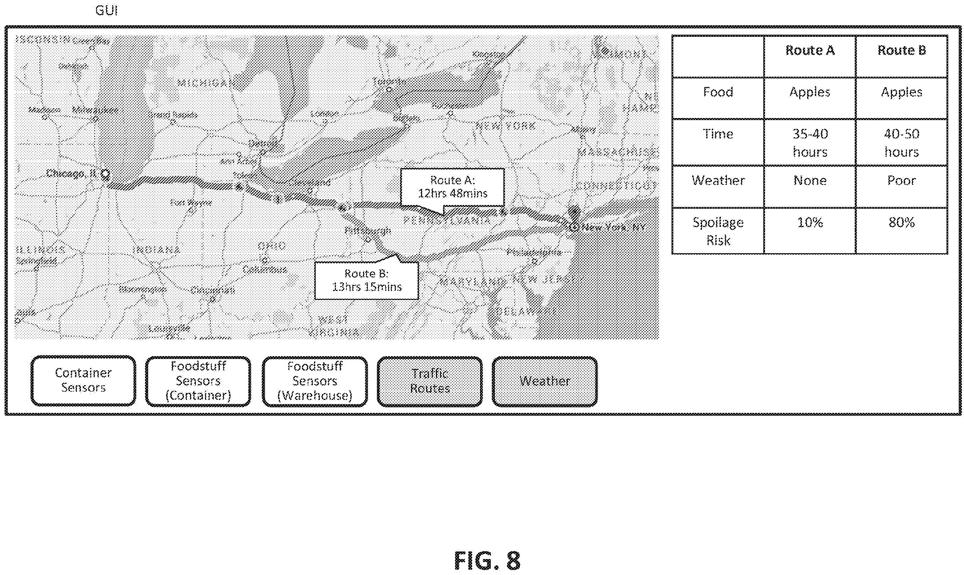

FIG. 8 depicts a graphical user interface (GUI) in accordance with an exemplary embodiment. The GUI as shown here shows two alternate routes for the user, Route A and Route B. The routes are shown on the map. On the bottom are a series of buttons showing the sensor and context data that was used in the analysis, the user may click those buttons to view the actual data (e.g. Container Sensors for sensors affixed to the container and the rig). On the right is a table showing the Routes, the analysis that calculated them, their time, and the spoilage risk associated with each. Finally, there are two buttons where a user may select one route or the other.

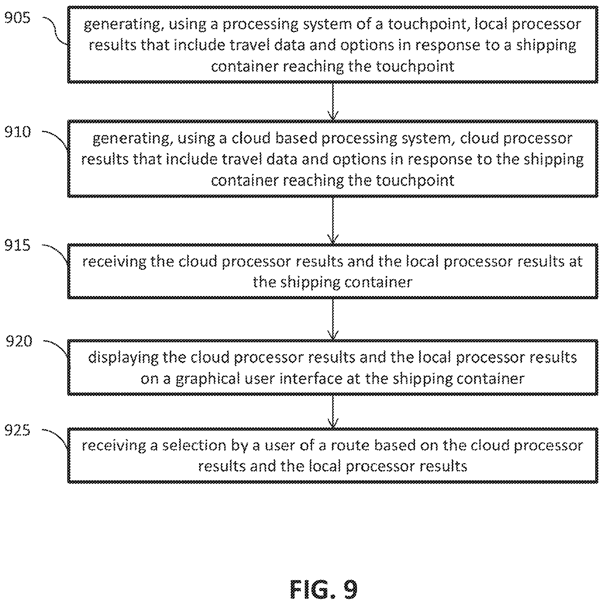

FIG. 9 depicts a flow chart of a method of processing data from a cold chain system in accordance with an embodiment of the present disclosure. The method includes generating, using a processing system of a touchpoint, local processor results that include travel data and options in response to a shipping container reaching the touchpoint (operation 905) and generating, using a cloud-based processing system, cloud processor results that include travel data and options in response to the shipping container reaching the touchpoint (operation 910). The method also includes receiving the cloud processor results and the local processor results at the shipping container (operation 915), displaying the cloud processor results and the local processor results on a graphical user interface at the shipping container (operation 920), and receiving a selection by a user of a route based on the cloud processor results and the local processor results (operation 925).

Accordingly, one or more embodiments of the present disclosure provide for parallel processing that has touchpoints with the container sensor system and performs the parallel processing at a cloud level as well as at each touchpoint. At each touchpoint, the shipper may make changes based on the local processer results or the cloud processor results.

One or more embodiments of the present disclosure may be a system, a method, and/or a computer program product. The computer program product may include a computer readable storage medium (or media) having computer readable program instructions thereon for causing a processor to carry out aspects of the one or more embodiments of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method of processing data of a cold chain system, the method comprising:
generating, using a processing system of a touchpoint, local processor results that include travel data and options in response to a shipping container reaching the touchpoint, wherein the generating includes:
receiving sensor data from sensors located at the touchpoint, wherein the sensors include foodstuff sensors and container sensors that include one or more of a temperature sensor, a vibration sensor, a liquid detection sensor, a light sensor, a sound sensor, and a pressure sensor;
receiving stored data from a database located in the cold chain system; and
generating the local processor results based on the sensor data and stored data;
generating, using a cloud-based processing system, cloud processor results that include travel data and options in response to the shipping container reaching the touchpoint;
receiving the cloud processor results and the local processor results at the shipping container;
displaying the cloud processor results and the local processor results on a graphical user interface included by the shipping container; and
receiving a selection by a user of a route of the shipping container based on the cloud processor results and the local processor results, wherein the selection is performed by the user at the shipping container.

2. The method of claim 1, wherein travel data comprises one or more of spoilage risk, food type, travel time estimate, traffic, event information, and weather projections.

3. The method of claim 1, wherein options comprise one or more of route options, transportation selection options, transfer options, load options, packaging options, and shipping container options.

4. The method of claim 1, wherein the cold chain system comprises a plurality of touchpoints, and wherein the plurality of touchpoints each correspond to a trans-shipment point in the cold chain system.

5. The method of claim 1, wherein the stored data includes context data comprised of at least one of weather information, route information, traffic information, event information, road condition information, semi-trailer truck information, shipping container information, sensor calibration information, sensor validation information, sensor type information, and element positioning information.

6. The method of claim 1, wherein generating, using the cloud-based processing system, cloud processor results that include travel data and options further comprises:
receiving sensor data from sensors located along the cold chain;
receiving stored data from a database located in the cold chain system; and
generating the cloud processor results based on the sensor data and stored data.

7. The method of claim 6, wherein the stored data includes context data comprised of at least one of weather information, route information, traffic information, event information, road condition information, semi-trailer truck information, shipping container information, sensor calibration information, sensor validation information, sensor type information, and element positioning information.

8. The method of claim 6,
wherein the sensors include foodstuff sensors and container sensors that include one or more of a temperature sensor, a vibration sensor, a liquid detection sensor, a light sensor, a sound sensor, and a pressure sensor, and wherein the sensors are located in at least one of the local touchpoint processing system, the shipping container, another local touchpoint, along a transport network, along a data network, and along a route selected for travel.

9. A cold chain data processing system for processing data from a cold chain system, the cold chain data processing system comprising:
a processing system of a touchpoint configured to generate local processor results that include travel data and options in response to a shipping container reaching the touchpoint, wherein the generating includes:
receiving sensor data from sensors located at the touchpoint, wherein the sensors include foodstuff sensors and container sensors that include one or more of a temperature sensor, a vibration sensor, a liquid detection sensor, a light sensor, a sound sensor, and a pressure sensor;
receiving stored data from a database located in the cold chain system; and
generating the local processor results based on the sensor data and stored data;
a cloud-based processing system configured to generate cloud processor results that include travel data and options in response to the shipping container reaching the touchpoint; and
wherein the shipping container comprises:
a communication receiver that receives the cloud processor results and the local processor results;
a graphical user interface that displays the cloud processor results and the local processor results; and
an input device configured to receive a selection by a user of a route of the shipping container based on the cloud processor results and the local processor results, wherein the selection is performed by the user at the shipping container.

10. The cold chain data processing system of claim 9,
wherein travel data comprises one or more of spoilage risk, food type, travel time estimate, traffic, event information, and weather projections, and
wherein options comprise one or more of route options, transportation selection options, transfer options, load options, packaging options, and shipping container options.

11. The cold chain data processing system of claim 9, wherein the processing system of the touchpoint further comprises:
sensor data from sensors located at the touchpoint; and
stored data from a database located in the cold chain system,
wherein the local processor results are generated based on the sensor data and stored data.

12. The cold chain data processing system of claim 11,
wherein the stored data includes context data comprised of weather information, route information, traffic information, event information, road condition information, semi-trailer truck information, shipping container information, sensor calibration information, sensor validation information, sensor type information, and element positioning information,
wherein the database is made up of one or more of a cloud database, a risk database, a context database, a local touchpoint database, a shipping container local risk database, and
wherein the sensors include foodstuff sensors and container sensors that include one or more of a temperature sensor, a vibration sensor, a liquid detection sensor, a light sensor, a sound sensor, and a pressure sensor.

13. The cold chain data processing system of claim 9, wherein the cloud-based processing system further comprises:
sensor data from sensors located along the cold chain; and
stored data from a database located in the cold chain system,
wherein the cloud processor results are generated based on the sensor data and stored data.

14. The cold chain data processing system of claim 13,
wherein the stored data includes context data comprised of weather information, route information, traffic information, event information, road condition information, semi-trailer truck information, shipping container information, sensor calibration information, sensor validation information, sensor type information, and element positioning information,
wherein the database is made up of one or more of a cloud database, a risk database, a context database, a local touchpoint database, a shipping container local risk database,
wherein the sensors include foodstuff sensors and container sensors that include one or more of a temperature sensor, a vibration sensor, a liquid detection sensor, a light sensor, a sound sensor, and a pressure sensor, and
wherein the sensors are located in at least one of the local touchpoint processing system, the shipping container, another local touchpoint, along a transport network, along a data network, and along a route selected for travel.

## Patentansprüche

1. Verfahren zum Verarbeiten von Daten eines Kühlkettensystems, wobei das Verfahren Folgendes umfasst:
Erzeugen, unter Verwendung eines Verarbeitungssystems eines Touchpoints, von lokalen Prozessorergebnissen, die Reisedaten und Optionen beinhalten, als Reaktion darauf, dass ein Versandbehälter den Touchpoint erreicht, wobei das Erzeugen Folgendes beinhaltet:
Empfangen von Sensordaten von Sensoren, die sich an dem Touchpoint befinden, wobei die Sensoren Lebensmittelsensoren und Behältersensoren beinhalten, die einen oder mehrere von einem Temperatursensor, einem Vibrationssensor, einem Flüssigkeitsdetektionssensor, einem Lichtsensor, einem Tonsensor und einem Drucksensor beinhalten;
Empfangen von gespeicherten Daten aus einer Datenbank, die sich in dem Kühlkettensystem befindet; und
Erzeugen der Ergebnisse des lokalen Prozessors basierend auf den Sensordaten und den gespeicherten Daten;
Erzeugen, unter Verwendung eines Cloud-basierten Verarbeitungssystems, von Ergebnissen des Prozessors, die Reisedaten und Optionen beinhalten, als Reaktion darauf, dass der Versandbehälter den Touchpoint erreicht;
Empfangen der Ergebnisse der Cloud-Prozessoren und der lokalen Prozessoren am Versandbehälter;
Anzeigen der Ergebnisse der Cloud-Prozessoren und der lokalen Prozessoren auf einer grafischen Benutzerschnittstelle, die in dem Versandbehälter beinhaltet ist; und
Empfangen einer Auswahl einer Route des Versandbehälters durch einen Benutzer basierend auf den Ergebnissen des Cloud-Prozessors und den Ergebnissen des lokalen Prozessors, wobei die Auswahl durch den Benutzer am Versandbehälter durchgeführt wird.

2. Verfahren nach Anspruch 1, wobei die Reisedaten eines oder mehrere von einem Verderbrisiko, einem Lebensmitteltyp, einer geschätzten Reisezeit, einem Verkehr, Ereignisinformationen und Wetterprognosen umfassen.

3. Verfahren nach Anspruch 1, wobei die Optionen eine oder mehrere von Routenoptionen, Transportauswahloptionen, Überführungsoptionen, Verladeoptionen, Verpackungsoptionen und Versandbehälteroptionen umfassen.

4. Verfahren nach Anspruch 1, wobei das Kühlkettensystem eine Vielzahl von Touchpoints umfasst, und wobei die Vielzahl von Touchpoints jeweils einem Umladepunkt in dem Kühlkettensystem entspricht.

5. Verfahren nach Anspruch 1, wobei die gespeicherten Daten Kontextdaten beinhalten, die mindestens eine von Wetterinformationen, Routeninformationen, Verkehrsinformationen, Ereignisinformationen, Straßenzustandsinformationen, Informationen über Sattelschlepper, Transportbehälter, Sensorkalibrierungsinformationen, Sensorvalidierungsinformationen, Sensortypinformationen und Elementpositionierungsinformationen umfassen.

6. Verfahren nach Anspruch 1, wobei das Erzeugen von Cloud-Prozessor-Ergebnissen, die Reisedaten und Optionen beinhalten, unter Verwendung des Cloud-basierten Verarbeitungssystems ferner Folgendes umfasst:
Empfangen von Sensordaten von Sensoren, die sich entlang der Kühlkette befinden;
Empfangen von gespeicherten Daten aus einer Datenbank, die sich in dem Kühlkettensystem befindet; und
Erzeugen der Ergebnisse des Cloud-Prozessors basierend auf den Sensordaten und den gespeicherten Daten.

7. Verfahren nach Anspruch 6, wobei die gespeicherten Daten Kontextdaten beinhalten, die mindestens eine von Wetterinformationen, Routeninformationen, Verkehrsinformationen, Ereignisinformationen, Straßenzustandsinformationen, Informationen über Sattelschlepper, Transportbehälter, Sensorkalibrierungsinformationen, Sensorvalidierungsinformationen, Sensortypinformationen und Elementpositionierungsinformationen umfassen.

8. Verfahren nach Anspruch 6,
wobei die Sensoren Lebensmittelsensoren und Behältersensoren beinhalten, die einen oder mehrere von einem Temperatursensor, einem Vibrationssensor, einem Flüssigkeitsdetektionssensor, einem Lichtsensor, einem Geräuschsensor und einem Drucksensor beinhalten, und wobei sich die Sensoren in mindestens einem von dem Verarbeitungssystem für lokale Touchpoints, dem Versandbehälter, einem anderen lokalen Touchpoint, entlang eines Transportnetzwerks, entlang eines Datennetzwerks und entlang einer für die Reise ausgewählten Route befinden.

9. Kühlketten-Datenverarbeitungssystem zur Verarbeitung von Daten aus einem Kühlkettensystem, wobei das Kühlketten-Datenverarbeitungssystem Folgendes umfasst:
ein Verarbeitungssystem eines Touchpoints, das konfiguriert ist zum Erzeugen von lokalen Prozessorergebnissen, die Reisedaten und Optionen beinhalten, wenn ein Versandbehälter den Touchpoint erreicht, wobei das Erzeugen Folgendes beinhaltet:
Empfangen von Sensordaten von Sensoren, die sich an dem Touchpoint befinden, wobei die Sensoren Lebensmittelsensoren und Behältersensoren beinhalten, die einen oder mehrere von einem Temperatursensor, einem Vibrationssensor, einem Flüssigkeitsdetektionssensor, einem Lichtsensor, einem Tonsensor und einem Drucksensor beinhalten;
Empfangen von gespeicherten Daten aus einer Datenbank, die sich in dem Kühlkettensystem befindet; und
Erzeugen der Ergebnisse des lokalen Prozessors basierend auf den Sensordaten und den gespeicherten Daten;
ein Cloud-basiertes Verarbeitungssystem, das konfiguriert ist zum Erzeugen von Cloud-Prozessor-Ergebnissen, die Reisedaten und Optionen beinhalten, wenn der Versandbehälter den Touchpoint erreicht; und
wobei der Versandbehälter Folgendes umfasst:
einen Kommunikationsempfänger, der die Ergebnisse des Cloud-Prozessors und die Ergebnisse des lokalen Prozessors empfängt;
eine grafische Benutzerschnittstelle, die die Ergebnisse des Cloud-Prozessors und die Ergebnisse des lokalen Prozessors anzeigt; und
eine Eingabevorrichtung, die konfiguriert ist zum Empfangen einer Auswahl einer Route des Versandbehälters durch einen Benutzer basierend auf den Ergebnissen des Cloud-Prozessors und den Ergebnissen des lokalen Prozessors, wobei die Auswahl durch den Benutzer am Versandbehälter durchgeführt wird.

10. Kühlketten-Datenverarbeitungssystem nach Anspruch 9, wobei die Reisedaten eines oder mehrere von einem Verderbrisiko, einem Lebensmitteltyp, einer geschätzten Reisezeit, einem Verkehr, Ereignisinformationen und Wetterprognosen umfassen und wobei die Optionen eine oder mehrere von Routenoptionen, Transportauswahloptionen, Überführungsoptionen, Verladeoptionen, Verpackungsoptionen und Versandbehälteroptionen umfassen.

11. Kühlketten-Datenverarbeitungssystem nach Anspruch 9, wobei das Verarbeitungssystem des Touchpoints ferner Folgendes umfasst:
Sensordaten von Sensoren, die sich an dem Touchpoint befinden; und
gespeicherte Daten aus einer Datenbank, die sich in dem Kühlkettensystem befindet,
wobei die Ergebnisse des lokalen Prozessors basierend auf den Sensordaten und den gespeicherten Daten erzeugt werden.

12. Kühlketten-Datenverarbeitungssystem nach Anspruch 11, wobei die gespeicherten Daten Kontextdaten beinhalten, die Wetterinformationen, Routeninformationen, Verkehrsinformationen, Ereignisinformationen, Straßenzustandsinformationen, Informationen über Sattelschlepper, Transportbehälter, Sensorkalibrierungsinformationen, Sensorvalidierungsinformationen, Sensortypinformationen und Elementpositionierungsinformationen umfassen,
wobei die Datenbank aus einer oder mehreren der folgenden Komponenten besteht: einer Cloud-Datenbank, einer Risikodatenbank, einer Kontextdatenbank, einer lokalen Touchpoint-Datenbank, einer lokalen Risikodatenbank für Schiffsbehälter und
wobei die Sensoren Lebensmittelsensoren und Behältersensoren beinhalten, die einen oder mehrere von einem Temperatursensor, einem Vibrationssensor, einem Flüssigkeitsdetektionssensor, einem Lichtsensor, einem Tonsensor und einem Drucksensor beinhalten.

13. Kühlketten-Datenverarbeitungssystem nach Anspruch 9, wobei das Cloud-basierte Verarbeitungssystem ferner Folgendes umfasst:
Sensordaten von Sensoren, die sich entlang der Kühlkette befinden; und
gespeicherte Daten aus einer Datenbank, die sich in dem Kühlkettensystem befindet,
wobei die Ergebnisse des Cloud-Prozessors basierend auf den Sensordaten und den gespeicherten Daten erzeugt werden.

14. Kühlketten-Datenverarbeitungssystem nach Anspruch 13, wobei die gespeicherten Daten Kontextdaten beinhalten, die Wetterinformationen, Routeninformationen, Verkehrsinformationen, Ereignisinformationen, Straßenzustandsinformationen, Informationen über Sattelschlepper, Transportbehälter, Sensorkalibrierungsinformationen, Sensorvalidierungsinformationen, Sensortypinformationen und Elementpositionierungsinformationen umfassen,
wobei die Datenbank aus einer oder mehreren der folgenden Komponenten besteht: einer Cloud-Datenbank, einer Risikodatenbank, einer Kontextdatenbank, einer lokalen Touchpoint-Datenbank, einer lokalen Risikodatenbank für Schiffsbehälter,
wobei die Sensoren Lebensmittelsensoren und Behältersensoren beinhalten, die einen oder mehrere von einem Temperatursensor, einem Vibrationssensor, einem Flüssigkeitsdetektionssensor, einem Lichtsensor, einem Tonsensor und einem Drucksensor beinhalten und
wobei sich die Sensoren an mindestens einem von dem Verarbeitungssystem für lokale Touchpoints, dem Schiffsbehälter, einem anderen lokalen Touchpoint, entlang eines Transportnetzwerks, entlang eines Datennetzwerks und entlang einer für die Reise ausgewählten Route befinden.

## Revendications

1. Procédé de traitement de données d'un système de chaîne du froid, le procédé comprenant :
la génération, à l'aide d'un système de traitement d'un point de contact, de résultats de processeur local qui comportent des données de déplacement et des options en réponse à l'arrivée d'un conteneur d'expédition au point de contact, dans lequel la génération comporte :
la réception de données de capteur provenant de capteurs situés au point de contact, dans lequel les capteurs comportent des capteurs de produit alimentaire et des capteurs de conteneur qui comportent un ou plusieurs capteurs parmi un capteur de température, un capteur de vibration, un capteur de détection de liquide, un capteur de lumière, un capteur sonore et un capteur de pression ;
la réception de données stockées provenant d'une base de données située dans le système de chaîne du froid ; et
la génération des résultats de processeur local sur la base des données de capteur et des données stockées ;
la génération, à l'aide d'un système de traitement en nuage, de résultats de processeur en nuage qui comportent des données de déplacement et des options en réponse à l'arrivée du conteneur d'expédition au point de contact ;
la réception des résultats de processeur en nuage et des résultats de processeur local au niveau du conteneur d'expédition ;
l'affichage des résultats de processeur en nuage et des résultats de processeur local sur une interface graphique utilisateur incluse par le conteneur d'expédition ; et
la réception d'une sélection par un utilisateur d'un itinéraire du conteneur d'expédition sur la base des résultats de processeur en nuage et des résultats de processeur local, dans lequel la sélection est réalisée par l'utilisateur au niveau du conteneur d'expédition.

2. Procédé selon la revendication 1, dans lequel des données de déplacement comprennent un ou plusieurs éléments parmi le risque de détérioration, le type de nourriture, l'estimation de temps de déplacement, le trafic, les informations d'événement et les projections météorologiques.

3. Procédé selon la revendication 1, dans lequel des options comprennent une ou plusieurs des options suivantes : options d'itinéraire, options de sélection de transport, options de transfert, options de chargement, options d'emballage et options de conteneur d'expédition.

4. Procédé selon la revendication 1, dans lequel le système de chaîne du froid comprend une pluralité de points de contact, et dans lequel la pluralité de points de contact correspondent chacun à un point de transbordement dans le système de chaîne du froid.

5. Procédé selon la revendication 1, dans lequel les données stockées comportent des données de contexte comprenant au moins des informations parmi des informations météorologiques, des informations d'itinéraire, des informations de trafic, des informations d'événement, des informations d'état de route, des informations de semi-remorque, des informations de conteneur d'expédition, des informations d'étalonnage de capteur, des informations de validation de capteur, des informations de type de capteur et des informations de positionnement d'élément.

6. Procédé selon la revendication 1, dans lequel la génération, à l'aide du système de traitement en nuage, de résultats de traitement en nuage qui comportent des données de déplacement et des options comprend en outre :
la réception de données de capteur provenant de capteurs situés le long de la chaîne du froid ;
la réception de données stockées provenant d'une base de données située dans le système de chaîne du froid ; et
la génération des résultats de processeur en nuage sur la base des données de capteur et des données stockées.

7. Procédé selon la revendication 6, dans lequel les données stockées comportent des données de contexte comprenant au moins des informations parmi des informations météorologiques, des informations d'itinéraire, des informations de trafic, des informations d'événement, des informations d'état de route, des informations de semi-remorque, des informations de conteneur d'expédition, des informations d'étalonnage de capteur, des informations de validation de capteur, des informations de type de capteur et des informations de positionnement d'élément.

8. Procédé selon la revendication 6,
dans lequel les capteurs comportent des capteurs de produit alimentaire et des capteurs de conteneur qui comportent un ou plusieurs capteurs parmi un capteur de température, un capteur de vibration, un capteur de détection de liquide, un capteur de lumière, un capteur sonore et un capteur de pression, et dans lequel les capteurs sont situés dans au moins l'un parmi le système de traitement de point de contact local, le conteneur d'expédition, un autre point de contact local, le long d'un réseau de transport, le long d'un réseau de données, et le long d'un itinéraire sélectionné pour un déplacement.

9. Système de traitement de données de chaîne du froid pour traiter des données provenant d'un système de chaîne du froid, le système de traitement de données de chaîne du froid comprenant :
un système de traitement d'un point de contact configuré pour générer des résultats de processeur local qui comportent des données de déplacement et des options en réponse à l'arrivée d'un conteneur d'expédition au point de contact, dans lequel la génération comporte :
la réception de données de capteur provenant de capteurs situés au point de contact, dans lequel les capteurs comportent des capteurs de produit alimentaire et des capteurs de conteneur qui comportent un ou plusieurs capteurs parmi un capteur de température, un capteur de vibration, un capteur de détection de liquide, un capteur de lumière, un capteur sonore et un capteur de pression ;
la réception de données stockées provenant d'une base de données située dans le système de chaîne du froid ; et
la génération des résultats de processeur local sur la base des données de capteur et des données stockées ;
un système de traitement en nuage configuré pour générer des résultats de processeur en nuage qui comportent des données de déplacement et des options en réponse à l'arrivée du conteneur d'expédition au point de contact ; et
dans lequel le conteneur d'expédition comprend :
un récepteur de communication qui reçoit les résultats de processeur en nuage et les résultats de processeur local ;
une interface graphique utilisateur qui affiche les résultats de processeur en nuage et les résultats de processeur local ; et
un dispositif d'entrée configuré pour recevoir une sélection par un utilisateur d'un itinéraire du conteneur d'expédition sur la base des résultats de processeur en nuage et des résultats de processeur local, dans lequel la sélection est réalisée par l'utilisateur au niveau du conteneur d'expédition.

10. Système de traitement de données de chaîne du froid selon la revendication 9,
dans lequel des données de déplacement comprennent un ou plusieurs éléments parmi le risque de détérioration, le type de nourriture, l'estimation de temps de déplacement, le trafic, les informations d'événement et les projections météorologiques, et dans lequel des options comprennent une ou plusieurs des options suivantes : options d'itinéraire, options de sélection de transport, options de transfert, options de chargement, options d'emballage et options de conteneur d'expédition.

11. Système de traitement de données de chaîne du froid selon la revendication 9, dans lequel le système de traitement du point de contact comprend en outre :
des données de capteur provenant de capteurs situés au point de contact ; et
des données stockées provenant d'une base de données située dans le système de chaîne du froid,
dans lequel les résultats de processeur local sont générés sur la base des données de capteur et des données stockées.

12. Système de traitement de données de chaîne du froid selon la revendication 11,
dans lequel les données stockées comportent des données de contexte comprenant des informations météorologiques, des informations d'itinéraire, des informations de trafic, des informations d'événement, des informations d'état de route, des informations de semi-remorque, des informations de conteneur d'expédition, des informations d'étalonnage de capteur, des informations de validation de capteur, des informations de type de capteur et des informations de positionnement d'élément, dans lequel la base de données est constituée d'une ou de plusieurs bases de données parmi une base de données en nuage, une base de données de risques, une base de données de contexte, une base de données de points de contact locaux, une base de données de risques locaux de conteneur d'expédition, et
dans lequel les capteurs comportent des capteurs de produit alimentaire et des capteurs de conteneur qui comportent un ou plusieurs capteurs parmi un capteur de température, un capteur de vibration, un capteur de détection de liquide, un capteur de lumière, un capteur sonore et un capteur de pression.

13. Système de traitement de données de chaîne du froid selon la revendication 9, dans lequel le système de traitement en nuage comprend en outre :
des données de capteur provenant de capteurs situés le long de la chaîne du froid ; et
des données stockées provenant d'une base de données située dans le système de chaîne du froid,
dans lequel les résultats de processeur en nuage sont générés sur la base des données de capteur et des données stockées.

14. Système de traitement de données de chaîne du froid selon la revendication 13,
dans lequel les données stockées comportent des données de contexte comprenant des informations météorologiques, des informations d'itinéraire, des informations de trafic, des informations d'événement, des informations d'état de route, des informations de semi-remorque, des informations de conteneur d'expédition, des informations d'étalonnage de capteur, des informations de validation de capteur, des informations de type de capteur et des informations de positionnement d'élément, dans lequel la base de données est constituée d'une ou de plusieurs bases de données parmi une base de données en nuage, une base de données de risques, une base de données de contexte, une base de données de points de contact locaux, une base de données de risques locaux de conteneur d'expédition,
dans lequel les capteurs comportent des capteurs de produit alimentaire et des capteurs de conteneur qui comportent un ou plusieurs capteurs parmi un capteur de température, un capteur de vibration, un capteur de détection de liquide, un capteur de lumière, un capteur sonore et un capteur de pression, et
dans lequel les capteurs sont situés dans au moins l'un parmi le système de traitement de point de contact local, le conteneur d'expédition, un autre point de contact local, le long d'un réseau de transport, le long d'un réseau de données, et le long d'un itinéraire sélectionné pour un déplacement.
